# EUROPEAN PATENT SPECIFICATION

(11) **EP 4 020 663 B1**
(45) Date of publication and mention of the grant of the patent: **26.06.2024**
(21) Application number: 21208898.3
(22) Date of filing: 18.11.2021
(51) Int. Cl.: H01M 10/44, H01M 10/54

(54) **SOLUTION DISCHARGES OF CELLS AND MODULES FOR BATTERY RECYCLING**
LÖSUNGSENTLADUNGEN VON ZELLEN UND MODULEN FÜR DAS BATTERIERECYCLING
DÉCHARGES DE SOLUTION DE CELLULES ET DE MODULES POUR LE RECYCLAGE DE BATTERIES

(30) Priority: 23.12.2020 SE 2051553
(43) Date of publication of application: 29.06.2022
(73) Proprietor: Northvolt AB, 112 47 Stockholm (SE)
(72) Inventor: Nembhard, Nicole, 112 47 Stockholm (SE); Alemrajabi, Mahmood, 112 47 Stockholm (SE)
(74) Representative: Blidefalk, Jenny

(56) References cited:
- CN-A- 109 585 960
- CN-A- 110 391 474
- US-A1- 2013 127 421
- NEMBHARD SHANTELLE ET AL: "Safe, Sustainable Discharge of Electric Vehicle Batteries as a Pre- treatment Step to Crushing in the Recycling Process", KTH SCHOOL OF INDUSTRIAL ENGINEERING AND MANAGEMENT, 17 December 2020 (2020-12-17), pages 1-66, XP055868551,

## Description

### TECHNICAL FIELD

The present invention relates to a process for the discharging of rechargeable batteries which employs a discharge medium in the form of a mixture of an electrically conductive fluid and an electrically conductive bulk material.

### BACKGROUND

Rechargeable or secondary batteries, including battery cells, battery modules and battery packs, find widespread use as electrical power supplies and energy storage systems. In particular in the transportation sector, to achieve the goal of the Intergovernmental Panel on Climate Change (IPCC) to limit global warming to 1.5°C, electric vehicles (EVs) powered by renewable energy have been tapped as the primary means to achieve decarbonization. As a result of the push from policymakers and global awareness, the number of electric vehicles bought and used worldwide will significantly increase in the next years and, as a consequence thereof, also the number of batteries at their end of life will significantly rise considering a typical life span of 10 years.

Batteries include toxic heavy metals and may release harmful gases with global warming potential if improperly disposed. Thus, recycling of batteries is imperative to meeting the IPCC goal. Furthermore, several of the elements used in EV batteries, such as lithium, cobalt, nickel, aluminum, copper and manganese, are valuable, in particularly considering the increasing demand for electric vehicles one the one side, and the scarcity of resources and the difficult mining conditions on the other side. Thus, saving resources, minimizing pollution and lowering cost are also driving factors for the recycling of batteries.

Current battery recycling processes follow a sequence of discharging and/or disassembly, hydro- or pyrometallurgy, metal extraction and product preparation. Hydrometallurgy, which is considered more environmentally friendly than pyrometallurgy, is preceded by crushing the batteries. For safety reasons, discharging of the batteries is crucial, because during the crushing process the anode and cathode materials could meet, thereby causing a short circuit or self-ignition. Also, in order to further lower the electrical risk, deep discharging to low voltage between 0.5 V and 0 V is required for safe crushing, since at higher voltages the potential between the anode and cathode is high enough to cause thermal runaway, that is, rapid, uncontrolled release of the stored electrical energy, causing the cell to open explosively or to cause a fire, which may even occur in batteries at low capacities (State of Charge (SOC) near 0%).

Also, there is the phenomenon observed in battery usage called "voltage rebound", also known as "voltage relaxation" or "recovery effect", where the available energy is less than the difference between energy charged and energy consumed. Intuitively, this is because the energy has been consumed from the edge of the battery and the charge has not yet diffused evenly around the battery. Voltage rebound can appear minutes to hours after a battery is discharged to 0 V, and the voltage of the battery can rise again up to 2.5 V or more, which is very dangerous, as self-ignition could occur when such a cell is being crushed. At small scales, self-ignition of the cells may not prove dangerous, however, to manage the volume of batteries expected in the next years, discharging becomes necessary to avoid explosions and damage to the recycling facility.

Ojanen et al. (Ojanen, S., Lundstrom, M., Santasalo-Aarnio, A., & Serna-Guerrero, R., "Challenging concept of electrochemical discharge using salt solutions for lithium-ion batteries recycling", Waste Management, 76, (2018), 242-249) describe submerging a battery cell in 5 wt.% sodium chloride solution for up to 24 hours. However, sodium chloride solution proved to be disadvantageous in terms of corrosion of the cell casing, thereby causing leakage of the active materials and electrolyte resulting in releasing toxic substances or allowing self-ignition of the battery. Ojanen et al. also suggested FeSO₄, ZnSO₄ and Na₂SO₄ as possible salt options. However, with this method, the batteries were unable to discharge beyond 1.5 V.

Processes are known for discharging of rechargeable batteries, in which the batteries to be discharged are inserted into a discharge mixture of a salt solution and conductive particles. The salt solution is preferably a sodium chloride salt solution. In known solutions, the discharge mixture is cooled with a cooling device to reduce the risk of thermal runaway.

In order to lower the cost and risk of battery recycling, a discharging process should be safe, that is, reduce the risk to the recycling facility by minimizing the fire or explosion hazard, minimizing or eliminating human interaction with the battery pack and limiting voltage rebound to -0.5V, should have a short enough duration to not become a bottleneck when a large quantity of batteries enter the facility, and should be sustainable, lowering global warming potential and other environmental hazards. There is a great demand in industry for a discharging process that fulfills one or more of the above-outlined objects.

### SUMMARY

An object of the present invention is to provide a process for the discharging of rechargeable batteries, which allows fast and effective discharging of batteries to a low voltage of about 0 V and, at the same time, allows to effectively prevent voltage rebound to greater then about 0.5 V. Furthermore, it is an object of the present invention to provide a process for the discharging of rechargeable batteries which is safe and minimizes the interaction of the operator with the batteries, and which avoids significant corrosion of the battery cells and minimizes the risk of self-ignition during discharging and subsequent crushing. Furthermore, it is an object of the present invention to provide a process for the discharging of rechargeable batteries which is sustainable and economically efficient. One or more of these objects may be solved by a process according to the independent claim 1. Further embodiments are specified in dependent claims 2-14.

Disclosed herein is a process for the discharging of rechargeable batteries having electric poles, the process comprising
a) providing a discharge medium in the form of a mixture of an electrically conductive fluid in the form of an aqueous salt solution and an electrically conductive bulk material, wherein a concentration of the salt in the aqueous salt solution is from 3 wt.% to 15 wt.% and wherein the electrically conductive material has an electrical conductivity at 20°C of at least 1.25×10³ S/m;
b) submerging one or more batteries in the discharge medium such that at least the electric poles of the one or more batteries are covered with the electrically conductive fluid and at the same time contact the electrically conductive bulk material;
c) removing the one or more batteries from the discharge medium, wherein the discharge medium provided in step a) is heated to 55 °C to 90 °C and the one or more batteries in step b) are submerged in the heated discharge medium for 1 h to 24 h.

The present inventors have surprisingly found that the process disclosed herein advantageously allows for fast and effective discharging of batteries to a low voltage of about 0 V and at a low voltage rebound of about 0.5 V or less, and without increased risk of thermal runaway. Furthermore, that the process disclosed herein advantageously prevents or minimizes corrosion of the battery cells during discharging and that the process requires only little interaction of the operator with the batteries during discharging, thereby making the process disclosed herein advantageous in terms of safety. Furthermore, that the process disclosed herein advantageously requires only little energy input and in an embodiment allows for recovering and reusing of the materials used, thereby making the process sustainable and economically efficient.

### BRIEF DESCRIPTION OF THE DRAWINGS

Different aspects are now described with reference to the accompanying drawings. Apparently, the accompanying drawings in the following description show merely some embodiments of this application, and a person of ordinary skill in the art may still derive other drawings from these accompanying drawings without creative efforts.

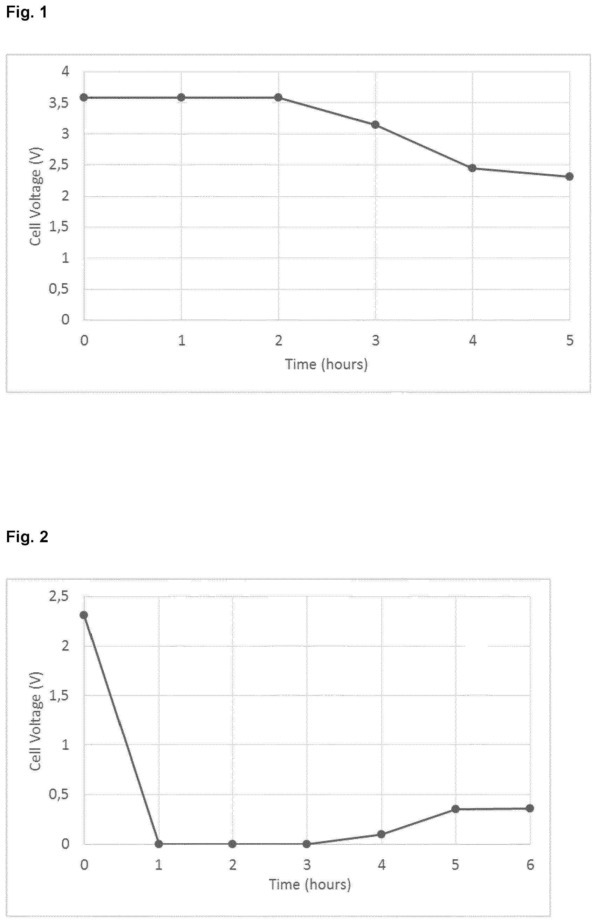

Figure 1 is a graph based on Example 2 showing initial battery discharging over 5 hours.
Figure 2 is a graph based on Example 3 showing further battery discharging over 6 hours subsequent to Example 2.

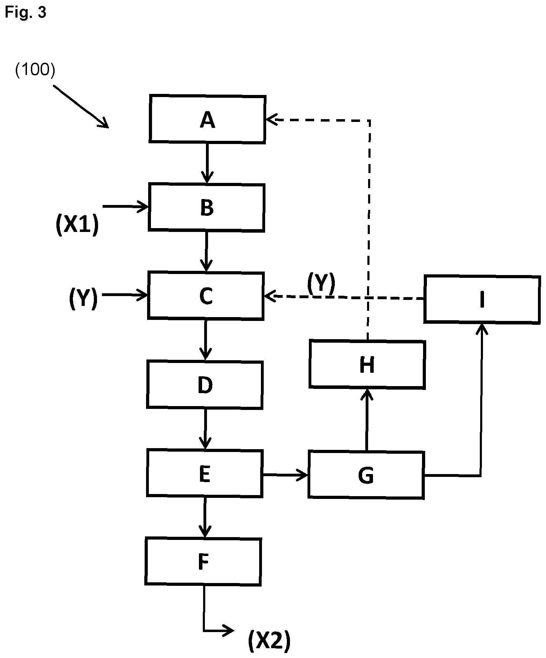

Figure 3 is a schematic flowchart illustrating a discharging process (100) according to an embodiment employing a discharge medium in the form of a mixture of an electrically conductive fluid and an electrically conductive bulk material. In step (A), an electrically conductive fluid such as an aqueous salt solution is provided, for example in a tank or container or the like, and the temperature of the fluid is set to 55 °C to 90 °C. The electrically conductive fluid can be freshly prepared, or it can be fluid recovered and recirculated from a recovery step (see step (H) below). One or more batteries (X1) to be discharged are placed in the tank and submerged in the electrically conductive fluid in step (B). In step (C), an electrically conductive bulk material is added, which can be either fresh material or recovered material (see step (I) below). The sequence of steps (B) and (C) may be changed. After ensuring that the electric poles of the one or more batteries contact the electrically conductive bulk material, the one or more batteries in discharging step (D) are left in the heated electrically conductive fluid in the tank until discharged. Afterwards, the discharged one or more batteries (X2) are removed from the tank in step (E), optionally followed by a rinsing and/or washing step (F), and can then be subjected to crushing. In step (G), the "used" discharge medium is sent to a separation unit to separate solid materials including the electrically conductive bulk material from the electrically conductive fluid. The fluid is led to a recovery unit in recovery step (H) for impurity removal (e.g. gas chromatography, wet scrubbing, fluoride removal and/or lithium removal) and concentration adjustment, and may be recirculated and reused in the step (A) of providing the electrically conductive fluid. In step (I), the separated electrically conductive bulk material is collected and washed, and may be reused and added in step (C).

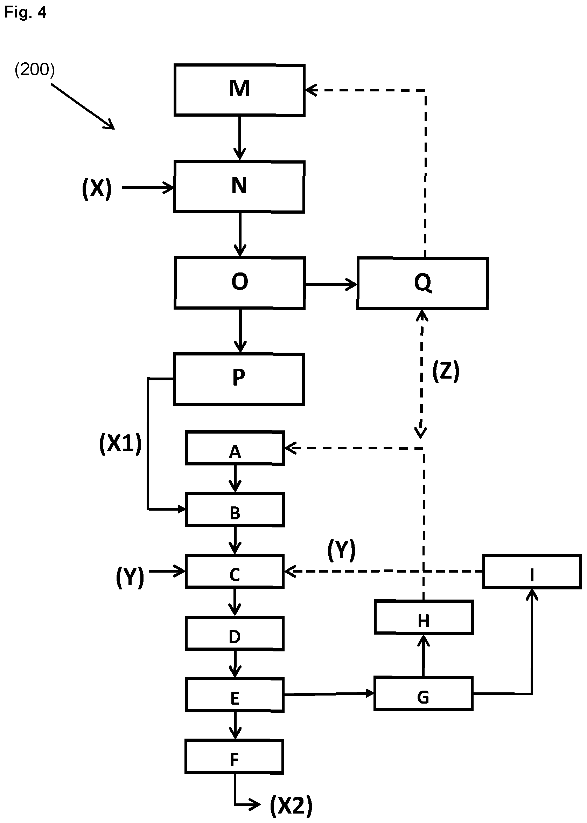

Figure 4 is a schematic flowchart illustrating a discharging process (200) according to an embodiment in which an initial discharging of the one or more batteries in a discharge medium in the form of an electrically conductive fluid is performed, before a further discharging according to the discharing process (100) illustrated and described in Fig. 3 is performed. In step (M), an electrically conductive fluid such as an aqueous salt solution is provided, for example in a tank or container or the like, and the temperature of the fluid is set to 55 °C to 90 °C. The electrically conductive fluid can be freshly prepared, or it can be fluid recovered and recirculated from a recovery step (see step (Q) below). One or more batteries (X) to be discharged are placed in the tank and submerged in the electrically conductive fluid in step (N). In discharging step (O) the one or more batteries are left in the heated electrically conductive fluid in the tank until discharged. Afterwards, the discharged one or more batteries (X1) are removed from the tank in step (P), optionally rinsed and/or washed, and are then subjected to step (B) for further discharging employing a discharge medium in the form of a mixture of an electrically conductive fluid and an electrically conductive bulk material according to the discharing process (100) illustrated and described in Fig. 3. Accordingly, steps (A) to (I) in Fig. 4 are as described with referece to Fig. 3.The "used" electrically conductive fluid is send to recovery step (Q) for impurity removal (e.g. gas chromatography, wet scrubbing, fluoride removal and/or lithium removal) and concentration adjustment, and may be recirculated and reused in the step (M) of providing the electrically conductive fluid. (Z) indicates that recovery steps (H) and (Q) may be interconnected.

### DETAILED DESCRIPTION

The technical solutions of the embodiments of this application will be described in more detail below. It is obvious that the embodiments to be described are a part rather than all of the embodiments of this application. The features of various embodiments can be combined to form further exemplary aspects of the present disclosure that may not be explicitly described or illustrated. Further it is to be understood that the words and terms employed herein are used for describing specific embodiments only, and is not intended to be limiting, since the scope of the present invention is defined by the appended claims.

Battery cells in general comprise an anode, cathode, separator and electrolyte. The electrolyte acts as a conductor allowing ions to move between the positive electrode (cathode) and the negative electrode (anode) and in the reverse, in an oxidation and reduction reaction respectively. In lithium-ion secondary batteries (LIBs), lithium ions move from the anode to the cathode during discharge. The separator is meant to allow the transfer of ions but not to allow a short circuit between the anode and cathode. Furthermore, a battery cell typically comprises a casing for housing the electrodes and the electrolyte, current collectors or terminals and various safety devices, such as polymer gaskets, a vent or valve for venting during thermal runaway. The positive terminal is connected to the cathode, e.g. by an aluminum tab, whereas the negative terminal is connected, e.g. by a copper tab, to the anode. The positive and negative terminals form the electric poles of the battery cell. The terms "electric pole" or "pole" and "terminal" are used interchangeably herein.

Batteries in general are characterized by their capacity and operating voltage. The operating voltage of a battery cell is limited by the potential difference across the terminals of the battery when no current is being drawn, also known as the open circuit voltage (Voc). For safe operation, battery cells are typically limited to an operating voltage of 4.2 V. Over a given voltage, a cell can only deliver a specific amount of electric charge or current, this is known as the capacity (Q) of the battery which is measured in ampere hours (Ah). The capacity is limited by the electrode, particularly cathode materials. Whether a battery cell is fully charged or not is monitored using the State of Charge (SOC). The SOC is defined as the available electric charge over the full capacity of the battery. At 100% SOC a battery cell is fully charged and has its full capacity. At 0% SOC, the cell has little capacitance left and can supply little current.

As used herein, the term "battery" or "batteries" is intended to include a battery cell or battery cells, a battery module or battery modules, which typically contain a plurality of battery cells, and a battery pack or battery packs, which typically contain a plurality of battery modules.

As used herein, a "bead" or "beads" is understood to mean round beads, that is, beads of essential spherical shape.

As used herein, a "salt" is a chemical compound consisting of an ionic assembly of cations and anions.

In a first aspect, a process is provided for the discharging of rechargeable batteries having electric poles, the process comprising
a) providing a discharge medium in the form of a mixture of an electrically conductive fluid and an electrically conductive bulk material;
b) submerging one or more batteries in the discharge medium such that at least the electric poles of the one or more batteries are covered with the electrically conductive fluid and at the same time contact the electrically conductive bulk material;
c) removing the one or more batteries from the discharge medium,
wherein the discharge medium provided in step a) is heated to 55 °C to 90 °C, preferably 60 °C to 80 °C, and the one or more batteries in step b) are submerged in the heated discharge medium for 1 h to 24 h, preferably 1 h to 10 h, more preferably 1 h to 6 h.

Preferably, the rechargeable batteries are rechargeable lithium ion batteries.

According to this aspect, the discharge medium is in the form of a mixture of an electrically conductive fluid and an electrically conductive bulk material.

The discharge medium can be held in any tank or container or the like big enough to ensure that the one or more batteries to be discharged can be placed therein and submerged in the discharge solution as desired.

The discharge medium is preferably provided in step a) by mixing the electrically conductive fluid and the electrically conductive bulk material. The electrically conductive fluid can be prepared in a tank first, for example in case of an aqueous salt solution, salt and water can be mixed to the desired concentration in the tank, or the electrically conductive fluid can be prepared in another container and filled into the tank first, and afterwards the electrically conductive bulk material is added. Or, in another embodiment, the electrically conductive bulk material can be provided to the tank first, and the electrically conductive fluid is prepared in another container and filled into the tank afterwards. In another embodiment, the electrically conductive fluid can be prepared in or filled into the tank first, then the one or more batteries to be discharged are placed into the tank, and afterwards the electrically conductive bulk material is added, to thereby provide the mixture of the electrically conductive fluid and the electrically conductive bulk material. Or, in still another embodiment, the electrically conductive bulk material can be provided to the tank first, then the one or more batteries to be discharged are placed into the tank, and afterwards the electrically conductive fluid is filled into the tank, to thereby provide the mixture of the electrically conductive fluid and the electrically conductive bulk material. According to still another embodiment, when the electrically conductive bulk material is first provided to the tank, in a first step only a first portion of the electrically conductive bulk material is provided to the tank, such that at least a portion of the bottom of the tank is covered by a layer of the electrically conductive bulk material, then the one or more batteries to be discharged are placed into the tank and on top of the layer of electrically conductive bulk material, and afterwards, in a second step a second portion (i.e. the remaining portion) of the electrically conductive bulk material is added to the tank.

The amount of the discharge medium, and consequently the amount of the electrically conductive fluid and the amount of the electrically conductive bulk material to be used varies depending e.g. on the size or volume of the one or more batteries to be discharged and submerged in the discharge medium, as explained below, on the size or volume of the tank or the like.

The tank or container or the like holding the discharge medium is preferably placed into a bath of water or recirculating water, which can be heated to and maintained at any desired temperature in order to heat the discharge medium and to maintain the discharge medium at the temperature desired during discharging, as will be explained below. Further preferably, a heat exchanger can be connected to the water bath, which allows both heating and cooling of the water to maintain the temperature, since the discharging process produces its own heat.

Further, in order to discharge the one or more batteries in step b) the one or more batteries to be discharged are submerged or placed in the discharge medium such that at least the electric poles of the one or more batteries are covered with the electrically conductive fluid and at the same time contact the electrically conductive bulk material.

The electrically conductive bulk material when contacting both electric poles forms a low resistance conductive path between the poles, thereby allowing a high current to pass and causing a short circuit which makes possible deep discharging to a low voltage in short times. The electrically conductive fluid keeps the temperature about the cell even, so as to avoid hot spots that can trigger thermal runaway, and also hinders extensive corrosion.

Preferably, for submerging the one or more batteries in the discharge medium, the one or more batteries are placed and fixed in a holder or the like, which is then placed into the tank or container that holds the discharge medium, so that the interaction of the operator with the batteries is minimized. If more than one batteries are to be discharged at the same time, the batteries, i.e. battery cells, battery modules and/or battery packs, are preferably placed into the tank and submerged in the discharge medium such that all terminals are oriented in the same direction (i.e. that all negative terminals are oriented in the same direction and all positive terminals are oriented in the same direction). This can for examples be achieved by fixing the batteries using a holder or the like.

For submerging the one or more batteries in the discharge medium as defined, the amount of the discharge medium, that is, the amount of the electrically conductive fluid and the amount of the electrically conductive bulk material, is chosen such that the electrically conductive fluid covers at least the electric poles of the one or more batteries and that the electrically conductive bulk material at the same time contacts at least the electric poles of the one or more batteries, in order to ensure formation of a conductive path between the electric poles, thereby causing a short circuit.

Preferably, the one or more batteries are submerged in the discharge medium such that they are completely covered (i.e. the whole battery body is covered) with the electrically conductive fluid, and the amount of the electrically conductive fluid is chosen accordingly. By this, the temperature about the cell can be more efficiently kept even, thereby making it possible to avoid thermal runaway more effectively.

Further preferably, the one or more batteries are submerged in the discharge medium such that they are also completely covered (i.e. the whole battery body is covered) with the electrically conductive bulk material to ensure that the electrically conductive bulk material contacts the electric poles of the one or more batteries, and the amount of the electrically conductive bulk material is chosen accordingly. This embodiment is especially preferred if batteries to be discharged have their electric poles substantially located on opposite sides of the battery body, in particular at a bottom side and a top side of the battery body. Such batteries preferably are completely submerged in the discharge medium, i.e., completely covered by the electrically conductive fluid and the electrically conductive bulk material to ensure that the electric poles being located on opposite sides contact the electrically conductive bulk material and are connected to each other, so that a conductive path between the electric poles is established. However, for batteries which have both electric poles substantially located on the same side of the battery body, it can be preferred that the electrically conductive bulk material is spread such that only a layer of electrically conductive bulk material is formed that contacts both electric poles (for example one layer of electrically conductive bulk material on top of the one or more batteries, or one layer of electrically conductive bulk material on the bottom of the tank, depending on how the batteries to be discharged are placed in the tank).

According to a further preferred embodiment of the process, one or more of the following steps may be performed in order to ensure even distribution of the electrically conductive bulk material and/or to ensure that all the terminals are in intimate contact with the electrically conductive bulk material: filling the electrically conductive bulk material into the tank or container or the like from different outside positions; after addition of the electrically conductive bulk material or after submerging of the one or more batteries in the discharge medium, shaking the tank or container or the like; and/or, after addition of the electrically conductive bulk material or after submerging of the one or more batteries in the discharge medium, circulating or stirring the discharge medium.

For discharging the one or more batteries in step b), in the process according to the invention the discharge medium provided in step a) is heated to 55 °C to 90 °C, preferably to 60 °C to 80 °C. Further, according to the invention the one or more batteries are submerged in the heated discharge medium for 1 h to 24 h, preferably 1 h to 10 h, more preferably 1 h to 6 h. It has surprisingly been found that under these conditions the batteries can be effectively deep discharged to a low voltage of about 0 V without observing voltage rebound to greater then about 0.5 V even at such short discharge times. Moreover, it has surprisingly been found that batteries can be safely discharged even at such elevated temperatures, i.e., without triggering thermal runaway of batteries. If the temperature of the discharge medium is set to temperatures above this range, the risk of thermal runaway rises. If the temperature of the discharge medium is below this range, the discharge process is prolonged.

Heating of the discharge medium is preferably performed by placing a tank or container or the like that holds the discharge medium into a bath of water or recirculating water, and heating the water to and maintaining the water at the temperature desired for discharging, thereby heating the discharge medium to and maintaining the discharge medium at the temperature desired for discharging.

According to the invention, the electrically conductive fluid is an aqueous salt solution. Within the framework of the present disclosure, an aqueous salt solution is a mixture of a salt in water, wherein the salt is dissociated in solution into its respective anionic and cationic components. As such, the aqueous salt solution may conduct electricity.

Preferably, the electrically conductive fluid is an aqueous salt solution preferably containing one or more salts selected from sodium carbonate (Na₂CO₃), sodium hydrogen carbonate (NaHCO₃), potassium carbonate (K₂CO₃), sodium nitrate (NaNO₃), sodium nitrite (NaNO₂), iron(II) sulfate (FeSO₄), ammonium hydroxide (NH₄OH) and potassium sulfate (NaSO₄). Even more preferably, the one or more salts are selected from Na₂CO₃ and NaHCO₃, wherein Na₂CO₃ is the most preferred salt. Accordingly, in a further preferred embodiment of the present invention, the electrically conductive fluid of the step a) is a Na₂CO₃ aqueous solution.

According to the invention, the electrically conductive fluid is an aqueous salt solution having a salt concentration from 3 wt.% to 15 wt.%. If the concentration of the salt is below this range, the electrolysis process would not be efficient or it even may not start at all. If the concentration of the salt is above this range, the risk of corrosion damaging of the batteries increases. More preferably with respect to discharge rate increase, the concentration of the salt in the aqueous salt solution is from 5 wt.% to 10 wt.%. Particularly preferably, the salt concentration is 10 wt.%. Accordingly, in a further preferred embodiment of the present invention, the electrically conductive fluid of the step a) is a 5 wt.% to 10 wt.%, more preferably 10 wt.%, Na₂CO₃ aqueous solution.

It is further preferable that an electrical conductivity at 20 °C of the electrically conductive fluid of step a), the aqueous salt solution, is in the range of about 4.5 S/m to about 7.5 S/m.

Further preferably, the pH of the electrically conductive fluid, preferably the aqueous salt solution, is in the range of 10 to 13, more preferable 11 to 12. If the pH is below this range, metal for example of the battery casing may corrode. If the pH of the electrically conductive fluid is above this range, plastics, in particular the gaskets separating the terminals, may break down, thereby increasing the risk of a short circuit and thermal runaway.

According to a preferred embodiment, the electrically conductive bulk material is made of an electrically conductive material (i.e., a material that conducts electricity). This means within the framework of the present disclosure that, for example in case the electrically conductive bulk material is in the form of bulk chips or beads, each of the chips or beads is entirely made of an electrically conductive material.

According to another preferred embodiment, at least a surface of the bulk material is made of an electrically conductive material (i.e., a material that conducts electricity). This means within the framework of the present disclosure that, for example in case the electrically conductive bulk material is in the form of bulk chips or beads, each of the chips or beads at least has a surface layer made of an electrically conductive material and, therefore, is electrically conductive at least at a surface thereof.

Preferably, the electrically conductive bulk material is made of (i.e., entirely made of) an electrically conductive material.

The electrically conductive material is preferably selected from graphite, carbon (amorphous), conductive metals, conductive alloys, conductive polymers, and combinations thereof, without being limited thereto. More preferably, the electrically conductive material is selected from conductive metals and conductive alloys, and combinations thereof. Preferred conductive metals are iron (Fe), aluminum (Al) or copper (Cu), without being limited thereto. Preferred conductive alloys are (stainless) steel or carbon steel, without being limited thereto.

According to the invention, the electrically conductive material has an electrical conductivity at 20°C (S/m) of at least 1.25×10³, preferably at least 2×10⁵, more preferably at least 1.4×10⁶, for example, 1.4×10⁶, 6.99×10⁶, 1×10⁷, 3.77×10⁷ or 5.96×10⁷.

According to a further preferred embodiment of the invention, the electrically conductive bulk material is made of (i.e., entirely made of) an electrically conductive material selected from graphite, carbon (amorphous), conductive metals, conductive alloys, conductive polymers, and combinations thereof, more preferably from conductive metals and conductive alloys, and combinations thereof, and even more preferably from Fe, Al, Cu, (stainless) steel and carbon steel.

The electrically conductive bulk material can be provided in various kinds of forms as long as the material is able to be oriented to be in contact with the poles and to form a conductive path between the poles to cause a short circuit. Preferably, the bulk material is in the form of bulk particles, beads, chips, or staples or in the form of a powder or grit. More preferably, the conductive bulk material is in the form of bulk chips or beads, wherein beads are particularly preferred, as beads have a uniform shape and size and thus advantageously allow a more uniform and therefore better contact to the terminals and formation of a more uniform conductive path between the poles.

According to a more preferred embodiment of the invention, the electrically conductive bulk material is in the form of (bulk) chips or beads which are made of (i.e., entirely made of) a conductive metal or a conductive alloy, or combinations thereof, and are more preferably made of Fe, Al, Cu, (stainless) steel or carbon steel.

Thus, according to a further preferred embodiment of the present invention, the discharge medium of step a) is a mixture of a 5 wt.% to 10 wt.% Na₂CO₃ aqueous solution and an electrically conductive bulk material in the form of chips or beads made of (i.e., entirely made of) Fe, Al, Cu, steel or carbon steel.

If beads are used as the electrically conductive bulk material, the size (i.e., diameter) of the beads is preferably in the range of 0.5 to 20 mm. If the beads are larger, they may not contact the terminals properly. If they are smaller, it is more complicated to recover and reuse the beads, since they are more difficult to collect and to manage, which makes the whole process more complicated. More preferably, the size of the beads is in the range of 1 to 15 mm. In one preferred embodiment, the size of the beads is in the range of 1 to 3 mm. In another preferred embodiment, the size of the beads is in the range of 4 to 6 mm.

Beads of this size ensure an optimal contact to the terminals and formation of a more uniform conductive path between the poles. In this respect it is particularly preferable that the chips or beads are essentially of a uniform shape and size (± 0.5 to 1 mm total deviation in diameter).

Thus, according to a particularly preferred embodiment of the present invention, the discharge medium of step a) is a mixture of a 5 wt.% to 10 wt.% Na₂CO₃ aqueous solution and beads made of (i.e., entirely made of) Fe, Al, Cu, steel or carbon steel and having a size in the range of 1 to 15 mm.

In some cases, in particular if one or more battery cells, battery modules or battery packs are to be discharged which may be at state of charge (SOC) of 30% or higher, it may be preferable to perform, in addition to the discharging process described above, an initial discharging in a discharge medium in the form of an electrically conductive fluid, i.e. without using an electrically conductive bulk material, in order to initially discharge the one or more batteries to a lower potential, preferably to about 0% SOC. This is done since such a discharge medium has a higher resistance, so the batteries are discharged more slowly to avoid a destructive release of energy.

According to an embodiment of the present invention, the process therefore further comprises the following steps, which are performed before the step of submerging the one or more batteries in the discharge medium in the form of a mixture of an electrically conductive fluid and an electrically conductive bulk material:
a') providing a discharge medium in the form of an electrically conductive fluid in the form of an aqueous salt solution;
b') submerging the one or more batteries in the discharge medium of step a') in the form of an aqueous salt solution such that at least the electric poles of the one or more batteries are covered with the electrically conductive fluid,
wherein the discharge medium provided in step a') in the form of an aqueous salt solution is heated to 55 °C to 90 °C, preferably 60 °C to 80 °C, and the one or more batteries in step b') are submerged in the heated discharge medium for 1 h to 24 h, preferably 2 h to 10 h, more preferably 2 h to 6 h.

Preferably, the one or more batteries are submerged or placed in the discharge medium such that they are completely covered (i.e. the whole battery body is covered) with the electrically conductive fluid in step b'). By this, the temperature about the cell can be more efficiently kept even, thereby making it possible to avoid thermal runaway more effectively.

According to the invention, the electrically conductive fluid of step a') is an aqueous salt solution, which preferably contains one or more salts selected from Na₂CO₃, NaHCO₃, K₂CO₃, NaNO₃, NaNO₂, FeSO₄, NH₄OH and NaSO₄, more preferably selected from Na₂CO₃ and NaHCO₃, and most preferably contains Na₂CO₃. Accordingly, in a particularly preferred embodiment of the present invention, the electrically conductive fluid of step a') is a Na₂CO₃ aqueous solution.

According to the invention, the electrically conductive fluid of step a') is an aqueous salt solution having a salt concentration from 3 wt.% to 15 wt.%, more preferably from 5 wt.% to 10 wt.%. Within this range, the discharge rate is fastest and the battery is not corrosion damaged. Particularly preferably, the salt concentration is 10 wt.%. Accordingly, in a further preferred embodiment of the present invention, the electrically conductive fluid of the step a') is a 5 wt.% to 10 wt.%, more preferably a 10 wt.%, Na₂CO₃ aqueous solution.

It is further preferable that an electrical conductivity at 20 °C of the electrically conductive fluid of step a'), of the aqueous salt solution, is in the range of about 4.5 S/m to about 7.5 S/m.

Further preferably, the pH of the electrically conductive fluid of step a'), preferably of the aqueous salt solution, is in the range of 10 to 13, more preferable 11 to 12. If the pH is below this range, metal for example of the battery casing might corrode. If the pH of the electrically conductive fluid is above this range, plastics, in particular the gaskets separating the terminals, might break down, each resulting in a short circuit.

The electrically conductive fluid used as the discharge medium in the steps a') and b') may be different compared to the electrically conductive fluid used for the discharge medium in the form of a mixture of an electrically conductive fluid and an electrically conductive bulk material in the steps a) and b). Preferably, however, the electrically conductive fluids are the same (i.e., same components, same physical properties). In another preferred embodiment, one and the same electrically conductive fluid is used in the steps a') and b') and the steps a) and b).

According to this embodiment of the invention, the discharge medium provided in step a') in the form of an electrically conductive fluid is heated to 55 °C to 90 °C, preferably 60 °C to 80 °C, and the one or more batteries in step b') are submerged in the heated discharge medium in the form of an electrically conductive fluid for 1 h to 24 h, preferably 1 h to 10 h, more preferably 1 h to 6 h, to discharge the battery to a lower potential at a short discharge time.

Heating of the discharge medium in the form of an electrically conductive fluid is preferably performed by placing a tank or container or the like that holds the discharge medium into a bath of water or recirculating water, and heating the water to and maintaining the water at the temperature desired for discharging, thereby heating the discharge medium to and maintaining the discharge medium at the temperature desired for discharging.

Therefore, in another aspect a process is provided for the discharging of rechargeable batteries having electric poles comprising the following steps:
a') providing a discharge medium in the form of an electrically conductive in the form of an aqueous salt solution;
b') submerging one or more batteries in the discharge medium of step a') such that at least the electric poles of the one or more batteries are covered with the electrically conductive fluid, to initially discharge the one or more batteries;
   a) providing a discharge medium in the form of a mixture of an electrically conductive fluid and an electrically conductive bulk material;
   b) submerging the initially discharged one or more batteries in the discharge medium of step a) such that at least the electric poles of the battery are covered with the electrically conductive fluid and at the same time contact the electrically conductive bulk material; and
   c) removing the one or more batteries from the discharge medium,

wherein the discharge medium provided in step a') is heated to 55 °C to 90 °C preferably 60 °C to 80 °C, and the one or more batteries in step b') are submerged in the heated discharge medium for 1 h to 24 h, preferably 1 h to 10 h, more preferably 1 h to 6 h, wherein the discharge medium provided in step a) is heated to 55 °C to 90 °C, preferably 60 °C to 80 °C, and the one or more batteries in step b) are submerged in the heated discharge medium for 1 h to 24 h, preferably 1 h to 10 h, more preferably 1 h to 6 h, and
wherein the discharge medium in the form of an electrically conductive fluid and the discharge medium in the form of a mixture of an electrically conductive fluid and an electrically conductive bulk material are as defined above.

Since batteries, i.e., battery cells, battery packs or battery modules, are typically housed in a casing or covering or the like, which can hinder the discharge medium, in particular the electrically conductive bulk material, to contact the electric poles, it may be advantageous that the casing or covering or the like is removed first, partially or wholly, before the battery is subjected to discharging, to ensure that the electric poles are exposed and can sufficiently be in contact with the discharge medium. Therefore, according to an embodiment of the invention, the process further comprises, before the one or more batteries are submerged in the discharge medium in the form of an electrically conductive fluid according to step b'), or, in case initial discharging is not performed, in the discharge medium in the form of a mixture of an electrically conductive fluid and an electrically conductive bulk material according to step b), removing a covering or casing of the battery and/or exposing the electric poles of the one or more batteries.

Used or waste batteries can be damaged due to, for example, physical abuse, overcharge, internal/external short circuits or high temperatures, resulting in gas formation in the cell that can cause an increase in the internal pressure, causing an explosion and/or a fire. Therefore, a voltage pre-check is typically made before discharging to detect if the voltage is irregular, indicative of some kind of damage of the battery. Batteries or battery cells are typically equipped with a safety feature called "vent", which can be opened to release gas formed in the cell and to reduce the risk of self-ignition or fire. Therefore, according to a further embodiment of the invention, the process further comprises, before submerging the one or more batteries in the discharge medium in the form of an electrically conductive fluid according to step b'), or, in case initial discharging is not performed, in the discharge medium in the form of a mixture of an electrically conductive fluid and an electrically conductive bulk material according to step b), performing a voltage check to detect if the voltage is irregular. If the check reveals that the voltage is irregular, for example, fluctuates instead of remaining constant or if it is outside of the normal voltage range, the process further comprises, as a subsequent step and before proceeding to the respective submerging step, opening a vent of the cell(s) for controlled release of internal pressure and to reduce the risk of self-ignition or fire during discharging.

After being discharged and removed from the discharge medium, the discharged batteries are ready for being crushed and may immediately be subjected to a crushing process or may be transported to a crushing facility. Optionally, the discharged batteries may be washed and dried first. Therefore, according to a further embodiment of the process of the invention, the process further comprises subjecting the one or more batteries to a crushing process immediately after removal from the discharge medium. According to another embodiment, after removal from the mixture the one or more batteries are first transported, for example to a crushing facility, and then subjected to a crushing process. According to a further preferred embodiment, the one or more batteries are washed, for example with water, and optionally dried after removal from the discharge medium and before being subjected to the crushing process.

The process of the invention advantageously allows for recovering and reusing or recirculating the discharge medium/media used in the discharging process (i.e., the "used" discharged medium), thereby making the process more sustainable and economically efficient. Therefore, according to a further preferred embodiment, the process of the invention further comprises, preferably after removal of the one or more batteries from the discharge medium, recovery of the electrically conductive fluid, wherein the recovery comprises the following steps:
- treating the discharge medium to separate solid materials from the electrically conductive fluid;
- subjecting the obtained electrically conductive fluid to an impurity removal to obtain a raw electrically conductive fluid;
- subjecting the obtained raw electrically conductive fluid to a concentration adjustment for reuse in providing the discharge medium.

The solid materials to be separated from the electrically conductive fluid may include the electrically conductive bulk material and/or solid precipitates optionally formed during discharging the batteries. Separation of the solid materials may be performed by filtering or by means of a magnet.

Impurity removal from the electrically conductive fluid obtained after separation of the solid materials may include one or more, preferably all, of the following steps:
- subjecting the electrically conductive fluid to a separation process, for example gas chromatography, to remove trace organics;
- subjecting the electrically conductive fluid to a wet scrubbing.
- subjecting the electrically conductive fluid to a fluoride and/or lithium removal.

During wet scrubbing, toxic gases/particulates are reacted with a liquid or captured in liquid droplets for subsequent processing. For example, during wet scrubbing gaseous hydrogen fluoride is converted to liquid form for fluoride removal.

Fluoride and lithium impurities in the electrically conductive fluid may result from leakage of the electrolyte into solution from open vents or other damage resulting in exposure of the battery cell interior. The fluoride and/or lithium removal preferably includes adding calcium carbonate and/or sodium phosphate to the electrically conductive fluid, and precipitating and removing the formed CaF₂ and/or Li₃PO₄, preferably by filtration.

According to a further preferred embodiment, which is preferably performed in addition to the above described recovery of the electrically conductive fluid, the process further comprises, preferably after removal of the one or more batteries from the discharge medium, recovery of the electrically conductive bulk material, wherein the recovery comprises the following steps:
- collecting the electrically conductive bulk material; and
- washing the collected electrically conductive bulk material for reuse in providing the discharge medium.

Separation of the electrically conductive bulk material may be performed by filtering or by means of a magnet.

It is to be understood that the electrically conductive fluid used as the sole discharge medium in the step b'), if performed, can likewise advantageously be recovered and reused, wherein the discharge medium is either combined with the discharge medium used in the step b) for recovery, or a separate recovery as described above is performed.

According to an alternative embodiment, the electrically conductive fluid is in a constant flow during discharging (i.e. initial discharging and/or deep discharging process) of the one or more batteries. That is, when the one or more batteries are submerged in the discharge medium during discharging, "used" electrically conductive fluid is constantly removed at a desired flow rate from the tank or the like into which the one or more batteries are placed for discharging, and at the same time "unused" electrically conductive fluid set to the desired temperature and concentration is constantly fed or recirculated at the desired flow rate into the tank or the like. Particularly preferably according to this embodiment, the "used" electrically conductive fluid constantly removed is directly subjected to a recovery process and impurity removal as described above, and the recovered electrically conductive fluid obtained therefrom is directly recirculated as the "unused" electrically conductive fluid, such that the electrically conductive fluid is in constant circulation.

The process disclosed herein results in fast and effective discharging of batteries to a low voltage of about 0 V and at a low voltage rebound of about 0.5 V or less, and without increasing the risk of thermal runaway. Furthermore, the process disclosed herein prevents or minimizes corrosion of the battery cells during discharging and requires only little interaction of the operator with the batteries during discharging, thereby making the process disclosed herein advantageous in terms of safety. Furthermore, the process disclosed herein requires only little energy input and allows for recovering and reusing of the materials used, thereby making the process economically and ecologically efficient. The invention is described in more detail below with the help of examples, which are not to be considered as limiting the scope of the invention as defined by the claims.

### WORKING EXAMPLES

### Example 1: Discharging of cylindrical cells at 70 °C with stainless steel

260 cylindrical lithium ion battery cells of type 21700 (3.25Ah, 4.2V max voltage, 3.6 nominal voltage) at approximately 2 V per cell are placed moulded plastic fitted to the cell size. The moulds hold the cell at the base so the cells can remain standing with the positive terminal exposed. The sleeve of the cells was removed before to expose the negative terminals and to allow for the minimum physical distance between the positive and negative terminals. A salt solution of 10 wt% sodium carbonate is prepared in a tank by adding 10 kg of sodium carbonate in 100 L of water. The temperature of the solution is set to 70°C. After the set temperature is reached, the mould with the cells is placed into the solution such that the cells are completely covered by the solution. Then, stainless steel beads are spread on top of the cells to create a 1-2 cm thick layer, forcing a short circuit between the positive and negative terminals. The cells are left in the solution/stainless steel mixture for 2 hours and 15 minutes for discharging. The temperature of the solution is not adjusted during discharging. At the end of the time, the cells are manually removed and rinsed. The stainless steel beads are separated from the solution by a magnet. The solution is subjected to recovery.

After 24 hours, the voltage of the cells is measured with a multimeter and is confirmed to be constant and between 0.01 and 0.3 V.

### Example 2: Initially discharging of prismatic cells at 60°C

8 prismatic cells at approximately 3,6 V (~30 % SOC) per cell are placed in a rectangular basket such that they remain standing with the positive and negative terminals exposed, thereby allowing solution flow between the terminals. The sleeve of the cells was removed before. A salt solution of 10 wt% sodium carbonate is prepared in a tank by adding 10 kg of sodium carbonate in 100 L of water. The temperature of the solution is set to 60°C. After the set temperature is reached, the basket with the cells is placed into the solution such that the cells are completely covered by the solution. The cells are left in the solution for 5 hours for discharging. The temperature of the solution is not adjusted during discharging. At the end of the time, the cells are manually removed from the solution and rinsed. The solution is subjected to recovery.

The voltage of the cells is checked and recorded every hour. After 5 hours the voltage of all the cells reaches approximately 2,3 V (~0% SOC). Table 1 and Figure 1 compile the results of the initial discharging.

**Table 1**

| Time (hours) | Voltage (V) |
|---|---|
| 0 | 3.58 |
| 1 | 3.58 |
| 2 | 3.58 |
| 3 | 3.14 |
| 4 | 2.44 |
| 5 | 2.31 |

### Example 3: Deep discharging of prismatic cells at 60°C with stainless steel

The prismatic cells at approximately 2,3 V per cell obtained from Example 2 are placed in a rectangular basket such that they remain standing with the positive and negative terminals exposed. A salt solution of 10 wt% sodium carbonate is prepared in a tank by adding 10 kg of sodium carbonate in 100 L of water. The temperature of the solution is set to 60°C. After the set temperature is reached, the basket with the cells is placed into the solution such that the cells are completely covered by the solution. Then, stainless steel chips of substantially conical shape (~10 mm in diameter) are spread on top of the cells to create a 1-2 cm thick layer, forcing a short circuit between the positive and negative terminals. The cells are left in the stainless steel/solution mixture for 6 hours for discharging. The temperature of the solution is not adjusted during discharging. At the end of the time, the cells were manually removed and rinsed. The stainless steel chips are separated from the solution by a magnet. The solution is subjected to recovery.

The voltage of the cells is checked and recorded every hour. After 1 hour the voltage of the cells reaches approximately 0 V. After 4 hours, voltage rebound is observed, which reaches approximately 0.36 V after 6 hours, before the cells are removed. Table 2 and Figure 2 compile the results of the discharging.

After 24 hours, the voltage of the cells is measured with a multimeter and is confirmed to be constant and between 0.1 and 0.5 V.

**Table 2**

| Time (hours) | Voltage (V) |
|---|---|
| 0 | 2,31 |
| 1 | 0 |
| 2 | 0 |
| 3 | 0 |
| 4 | 0.1 |
| 5 | 0.35 |
| 6 | 0.36 |

Without further elaboration, it is believed that a person skilled in the art can, using the present description, including the examples, utilize the present invention to its fullest extent. Although the invention has been described herein with regard to its preferred embodiments, which represent the best mode for carrying out the invention, it is understood that various changes as would be obvious to one of ordinary skill in this art can be made without departing from the scope of the disclosure, which is set forth in the appended claims.

## Claims

1. Process for the discharging of rechargeable batteries having electric poles, the process comprising:
a) providing a discharge medium in the form of a mixture of an electrically conductive fluid in the form of an aqueous salt solution and an electrically conductive bulk material, wherein a concentration of the salt in the aqueous salt solution is from 3 wt.% to 15 wt.% and wherein the electrically conductive material has an electrical conductivity at 20°C of at least 1.25× 10³ S/m;
b) submerging one or more batteries in the discharge medium such that at least the electric poles of the one or more batteries are covered with the electrically conductive fluid and at the same time contact the electrically conductive bulk material;
c) removing the one or more batteries from the discharge medium,
wherein the discharge medium provided in step a) is heated to 55 °C to 90 °C and the one or more batteries are submerged in the heated discharge medium for 1 h to 24 h.

2. Process according to claim 1, wherein the aqueous salt solution preferably contains one or more salts selected from Na₂CO₃, NaHCOs, K₂CO₃, NaNO₃, NaNO₂, FeSO₄, NH₄OH and NaSO₄.

3. Process according to claim 1 or 2, wherein the one or more batteries are submerged in the heated discharge medium for 1 h to 6 h.

4. Process according to any one of claims 1 to 3, wherein a pH of the electrically conductive fluid is in the range of 10 to 13.

5. Process according to any one of claims 1 to 4, wherein the electrically conductive bulk material is made of, or at least a surface thereof is made of, an electrically conductive material selected from graphite, carbon, conductive metals, conductive alloys, conductive polymers, and combinations of two or more thereof.

6. Process according to any one of claims 1 to 5, wherein the electrically conductive bulk material is in the form of particles, beads, chips or staples, or a powder or grit, and preferably is in the form of chips or beads.

7. Process according to any one of claims 1 to 6, wherein the electrically conductive bulk material is in the form of beads or chips made of a conductive metal or a conductive alloy.

8. Process according to claim 7, wherein the beads have a size of 0.5 to 20 mm.

9. Process according to any one of claims 1 to 8, further comprising, before the step of submerging the one or more batteries in the discharge medium in the form of a mixture of an electrically conductive fluid and an electrically conductive bulk material, the following steps:
a') providing a discharge medium in the form of an electrically conductive fluid in the form of an aqueous salt solution;
b') submerging the one or more batteries in the discharge medium of step a') such that at least the electric poles of the one or more batteries are covered with the electrically conductive fluid,
wherein the discharge medium provided in step a)' is heated to 55 °C to 90 °C and the one or more batteries in step b') are submerged in the heated discharge medium for 1 h to 24 h.

10. Process according to claim 9, wherein the aqueous salt solution of step a' preferably contains one or more salts selected from Na₂CO₃, NaHCOs, K₂CO₃, NaNO₃, NaNO₂, FeSO₄, NH₄OH and NaSO₄.

11. Process according to claim 9 or 10, wherein the aqueous salt solution of step a') wherein a concentration of the salt in the aqueous salt solution is from 3 wt.% to 15 wt.%, and/or a pH of the aqueous salt solution of step a' is in the range of 10 to 13.

12. Process according to any one of claims 1 to 11, further comprising, before the one or more batteries are submerged in the discharge medium according to step b)' or in the discharge medium according to step b), removing a casing of the one or more batteries and/or exposing the electric poles of the one or more batteries.

13. Process according to any one of claims 1 to 12, wherein the process further comprises, before submerging the one or more batteries in the discharge medium according to step b) or step b)', performing a voltage check to detect if a voltage of the one or more batteries is irregular.

14. Process according to any one of claims 1 to 13, wherein the process further comprises subjecting the one or more batteries to a crushing process after removal from the discharge medium.

15. Process according to any one of claims 1 to 14, wherein the process further comprises at least one of recovery of the electrically conductive fluid and recovery of the electrically conductive bulk material, wherein the recovery of the electrically conductive fluid comprises the following steps:
- treating the discharge medium to separate solid materials from the electrically conductive fluid;
- subjecting the obtained electrically conductive fluid to an impurity removal to obtain a raw electrically conductive fluid; and
- subjecting the obtained raw electrically conductive fluid to a concentration adjustment for reuse in providing the discharge medium,
and wherein the recovery of the electrically conductive bulk material comprises the following steps:
- collecting the electrically conductive bulk material; and
- washing the collected electrically conductive bulk material for reuse in providing the discharge medium.

## Patentansprüche

1. Verfahren zum Entladen von wiederaufladbaren Batterien mit elektrischen Polen, das Verfahren umfasst:
a) Bereitstellung eines Entlademediums in Form einer Mischung aus einer elektrisch leitfähigen Flüssigkeit in Form einer wässrigen Salzlösung und einem elektrisch leitfähigen Schüttgut, wobei eine Konzentration des Salzes in der wässrigen Salzlösung von 3 Gew.% bis 15 Gew.% beträgt und wobei das elektrisch leitfähige Material bei 20°C eine elektrische Leitfähigkeit von mindestens 1.25×10³ S/m aufweist;
b) Eintauchen einer oder mehrerer Batterien in das Entlademedium, so dass zumindest die elektrischen Pole der einen oder mehreren Batterien mit der elektrisch leitfähigen Flüssigkeit bedeckt sind und gleichzeitig das elektrisch leitfähige Schüttgut berühren;
c) Entfernen der einen oder mehreren Batterien aus dem Entlademedium,
wo das in Schritt a) bereitgestellte Entlademedium auf 55 °C bis 90 °C erhitzt wird und die eine oder mehreren Batterien für 1 h bis 24 h in das erhitzte Entlademedium eingetaucht werden.

2. Verfahren nach Anspruch 1, wobei die wässrige Salzlösung vorzugsweise ein oder mehrere Salze ausgewählt aus Na₂CO₃, NaHCO₃, K₂CO₃, NaNO₃, NaNO₂, FeSO₄, NH₄OH und NaSO₄ enthält.

3. Verfahren nach Anspruch 1 oder 2, wobei die eine oder mehreren Batterien für 1 h bis 6 h in das erhitzte Entlademedium eingetaucht werden.

4. Verfahren nach einem der Ansprüche 1 bis 3, wobei ein pH-Wert der elektrisch leitfähigen Flüssigkeit im Bereich von 10 bis 13 liegt.

5. Verfahren nach einem der Ansprüche 1 bis 4, wobei das elektrisch leitfähige Schüttgut aus einem elektrisch leitfähigen Material ausgewählt aus Graphit, Kohlenstoff, leitfähigen Metallen, leitfähigen Legierungen, leitfähigen Polymeren und Kombinationen aus zwei oder mehreren davon besteht oder zumindest eine Oberfläche davon besteht.

6. Verfahren nach einem der Ansprüche 1 bis 5, wobei das elektrisch leitfähige Schüttgut in Form von Partikeln, Perlen, Spänen oder Klammern oder einem Pulver oder Korn vorliegt und vorzugsweise in Form von Spänen oder Perlen vorliegt.

7. Verfahren nach einem der Ansprüche 1 bis 6, wobei das elektrisch leitfähige Schüttgut in Form von Perlen oder Spänen aus einem leitfähigen Metall oder einer leitfähigen Legierung besteht.

8. Verfahren nach Anspruch 7, wobei die Perlen eine Größe von 0,5 bis 20 mm haben.

9. Verfahren nach einem der Ansprüche 1 bis 8, das weiterhin umfasst, vor dem Schritt des Eintauchens der einen oder mehreren Batterien in das Entlademedium in Form einer Mischung aus einer elektrisch leitfähigen Flüssigkeit und einem elektrisch leitfähigen Schüttgut, die folgenden Schritte:
a') Bereitstellung eines Entlademediums in Form einer elektrisch leitfähigen Flüssigkeit in Form einer wässrigen Salzlösung;
b') Eintauchen der einen oder mehreren Batterien in das Entlademedium des Schrittes a') so, dass zumindest die elektrischen Pole der einen oder mehreren Batterien mit der elektrisch leitfähigen Flüssigkeit bedeckt sind,
wo das in Schritt a)' bereitgestellte Entlademedium auf 55 °C bis 90 °C erhitzt wird und die eine oder mehreren Batterien in Schritt b') für 1 h bis 24 h in das erhitzte Entlademedium eingetaucht werden.

10. Verfahren nach Anspruch 9, wobei die wässrige Salzlösung des Schrittes a' vorzugsweise ein oder mehrere Salze ausgewählt aus Na₂CO₃, NaHCO₃, K₂CO₃, NaNO₃, NaNO₂, FeSO₄, NH₄OH und NaSO₄ enthält.

11. Verfahren nach Anspruch 9 oder 10, wobei die wässrige Salzlösung des Schrittes a') eine Konzentration des Salzes in der wässrigen Salzlösung von 3 Gew.% bis 15 Gew.% beträgt und/oder ein pH-Wert der wässrigen Salzlösung des Schrittes a' im Bereich von 10 bis 13 liegt.

12. Verfahren nach einem der Ansprüche 1 bis 11, das weiterhin umfasst, bevor die eine oder mehreren Batterien in das Entlademedium gemäß Schritt b)' oder in das Entlademedium gemäß Schritt b) eingetaucht werden, das Entfernen einer Hülle der einen oder mehreren Batterien und/oder das Freilegen der elektrischen Pole der einen oder mehreren Batterien.

13. Verfahren nach einem der Ansprüche 1 bis 12, wobei das Verfahren weiterhin umfasst, vor dem Eintauchen der einen oder mehreren Batterien in das Entlademedium gemäß Schritt b) oder Schritt b)', eine Spannungsprüfung durchzuführen, um festzustellen, ob eine Spannung der einen oder mehreren Batterien unregelmäßig ist.

14. Verfahren nach einem der Ansprüche 1 bis 13, wobei das Verfahren weiterhin umfasst, dass die eine oder mehreren Batterien nach dem Entfernen aus dem Entlademedium einem Zerkleinerungsprozess unterzogen werden.

15. Verfahren nach einem der Ansprüche 1 bis 14, wobei das Verfahren weiterhin mindestens eine von Rückgewinnung der elektrisch leitfähigen Flüssigkeit und Rückgewinnung des elektrisch leitfähigen Schüttguts umfasst, wobei die Rückgewinnung der elektrisch leitfähigen Flüssigkeit die folgenden Schritte umfasst:
- Behandlung des Entlademediums zur Abtrennung von Feststoffen von der elektrisch leitfähigen Flüssigkeit;
- Unterwerfung der erhaltenen elektrisch leitfähigen Flüssigkeit einer Verunreinigungsentfernung zur Erlangung einer rohen elektrisch leitfähigen Flüssigkeit; und
- Unterwerfung der erhaltenen rohen elektrisch leitfähigen Flüssigkeit einer Konzentrationsanpassung zur Wiederverwendung bei der Bereitstellung des Entlademediums,
und wobei die Rückgewinnung des elektrisch leitfähigen Schüttguts die folgenden Schritte umfasst:
- Sammeln des elektrisch leitfähigen Schüttguts; und
- Waschen des gesammelten elektrisch leitfähigen Schüttguts zur Wiederverwendung bei der Bereitstellung des Entlademediums.

## Revendications

1. Procédé pour la décharge de batteries rechargeables ayant des pôles électriques, le procédé comprenant:
a) la fourniture d'un milieu de décharge sous la forme d'un mélange d'un fluide électriquement conducteur sous la forme d'une solution saline aqueuse et d'un matériau en vrac électriquement conducteur, où la concentration du sel dans la solution saline aqueuse est de 3 % en poids à 15 % en poids et où le matériau électriquement conducteur a une conductivité électrique à 20°C d'au moins 1,25×10³ S/m;
b) la submersion d'une ou plusieurs batteries dans le milieu de décharge de telle sorte qu'au moins les pôles électriques de la ou des batteries sont recouverts du fluide électriquement conducteur et en même temps en contact avec le matériau en vrac électriquement conducteur;
c) le retrait de la ou des batteries du milieu de décharge,
où le milieu de décharge fourni à l'étape a) est chauffé à 55 °C à 90 °C et la ou les batteries sont submergées dans le milieu de décharge chauffé pendant 1 h à 24 h.

2. Procédé selon la revendication 1, dans lequel la solution saline aqueuse contient de préférence un ou plusieurs sels choisis parmi Na₂CO₃, NaHCO₃, K₂CO₃, NaNO₃, NaNO₂, FeSO₄, NH₄OH et NaSO₄.

3. Procédé selon la revendication 1 ou 2, dans lequel la ou les batteries sont submergées dans le milieu de décharge chauffé pendant 1 h à 6 h.

4. Procédé selon l'une quelconque des revendications 1 à 3, dans lequel un pH du fluide électriquement conducteur est dans la plage de 10 à 13.

5. Procédé selon l'une quelconque des revendications 1 à 4, dans lequel le matériau en vrac électriquement conducteur est constitué, ou au moins une surface de celui-ci est constituée, d'un matériau électriquement conducteur choisi parmi le graphite, le carbone, les métaux conducteurs, les alliages conducteurs, les polymères conducteurs et les combinaisons de deux ou plusieurs de ceux-ci.

6. Procédé selon l'une quelconque des revendications 1 à 5, dans lequel le matériau en vrac électriquement conducteur est sous la forme de particules, de billes, de copeaux ou d'agrafes, ou d'une poudre ou d'un grain, et est de préférence sous la forme de copeaux ou de billes.

7. Procédé selon l'une quelconque des revendications 1 à 6, dans lequel le matériau en vrac électriquement conducteur est sous la forme de billes ou de copeaux constitués d'un métal conducteur ou d'un alliage conducteur.

8. Procédé selon la revendication 7, dans lequel les billes ont une taille de 0,5 à 20 mm.

9. Procédé selon l'une quelconque des revendications 1 à 8, comprenant en outre, avant l'étape de submersion de la ou des batteries dans le milieu de décharge sous la forme d'un mélange d'un fluide électriquement conducteur et d'un matériau en vrac électriquement conducteur, les étapes suivantes:
a') la fourniture d'un milieu de décharge sous la forme d'un fluide électriquement conducteur sous la forme d'une solution saline aqueuse;
b') la submersion de la ou des batteries dans le milieu de décharge de l'étape a') de telle sorte qu'au moins les pôles électriques de la ou des batteries sont recouverts du fluide électriquement conducteur,
où le milieu de décharge fourni à l'étape a)' est chauffé à 55 °C à 90 °C et la ou les batteries à l'étape b') sont submergées dans le milieu de décharge chauffé pendant 1 h à 24 h.

10. Procédé selon la revendication 9, dans lequel la solution saline aqueuse de l'étape a' contient de préférence un ou plusieurs sels choisis parmi Na₂CO₃, NaHCO₃, K₂CO₃, NaNO₃, NaNO₂, FeSO₄, NH₄OH et NaSO₄.

11. Procédé selon la revendication 9 ou 10, dans lequel la solution saline aqueuse de l'étape a') où une concentration du sel dans la solution saline aqueuse est de 3 % en poids à 15 % en poids, et/ou un pH de la solution saline aqueuse de l'étape a' est dans la plage de 10 à 13.

12. Procédé selon l'une quelconque des revendications 1 à 11, comprenant en outre, avant que la ou les batteries soient submergées dans le milieu de décharge selon l'étape b)' ou dans le milieu de décharge selon l'étape b), le retrait d'un boîtier de la ou des batteries et/ou l'exposition des pôles électriques de la ou des batteries.

13. Procédé selon l'une quelconque des revendications 1 à 12, dans lequel le procédé comprend en outre, avant de submerger la ou les batteries dans le milieu de décharge selon l'étape b) ou l'étape b)', l'exécution d'un contrôle de tension pour détecter si une tension de la ou des batteries est irrégulière.

14. Procédé selon l'une quelconque des revendications 1 à 13, dans lequel le procédé comprend en outre la soumission de la ou des batteries à un processus de broyage après leur retrait du milieu de décharge.

15. Procédé selon l'une quelconque des revendications 1 à 14, dans lequel le procédé comprend en outre au moins l'une des récupérations du fluide électriquement conducteur et de la récupération du matériau en vrac électriquement conducteur, où la récupération du fluide électriquement conducteur comprend les étapes suivantes:
- le traitement du milieu de décharge pour séparer les matériaux solides du fluide électriquement conducteur;
- la soumission du fluide électriquement conducteur obtenu à un enlèvement d'impuretés pour obtenir un fluide électriquement conducteur brut; et
- la soumission du fluide électriquement conducteur brut obtenu à un ajustement de concentration pour une réutilisation dans la fourniture du milieu de décharge,
et où la récupération du matériau en vrac électriquement conducteur comprend les étapes suivantes:
- la collecte du matériau en vrac électriquement conducteur; et
- le lavage du matériau en vrac électriquement conducteur collecté pour une réutilisation dans la fourniture du milieu de décharge.
